Europäisches Patentamt

European Patent Office

Office européen des brevets

(11) Publication number: **0 309 138**
A2

## EUROPEAN PATENT APPLICATION

(21) Application number: 88308452.7

(22) Date of filing: 13.09.88

(51) Int. Cl.4: **B65D 1/00** , **B29C 49/00**

(30) Priority: 21.09.87 US 99364

(43) Date of publication of application:
29.03.89 Bulletin 89/13

(84) Designated Contracting States:
AT BE CH DE FR GB IT LI LU NL SE

(71) Applicant: EXXON CHEMICAL PATENTS INC.
200 Park Avenue
Florham Park New Jersey 07932(US)

(72) Inventor: Novak, David Paul
13003 Hidden Castle Drive
Houston Texas 77015(US)

(74) Representative: Veldhuizen, Albert Dirk
Willem et al
Exxon Chemical Limited Exxon Chemical
Technology Centre PO Box 1
Abingdon Oxfordshire OX13 6BB(GB)

(54) Random copolymer polypropylene container and method for producing the same.

(57) A random copolymer polypropylene container having improved clarity, gloss, strength, stiffness and wall thickness properties and method for producing the same are provided. The container comprises a biaxially oriented propylene-ethylene random copolymer resin having an ethylene content between about 0.5% to about 8% by weight, based upon the weight of the resin, and a melt flow rate of greater than about 50 g/10 min. The container is produced by injection molding the resin to produce a preform, then stretch-blow molding the preform to biaxially orient the resin into the shape of the container.

EP 0 309 138 A2

## Random Copolymer Polypropylene Container and Method for Producing the Same

The present invention relates generally to polypropylene containers and methods for producing the same. More particularly, the present invention relates to biaxially oriented random copolymer polypropylene containers having exceptional clarity, gloss, strength, stiffness and wall thickness properties, and methods for producing the same.

Polypropylene containers have found wide-spread utility in a variety of applications such as, for example, food, medicine, detergent and cosmetic bottles or containers, because of their excellent heat and chemical resistance, strength, shelf-like and low cost.

Certain physical and appearance characteristics are highly desirable in such containers. High tensile strength, drop impact strength and stiffness properties are desired for improved performance in packaging, shipping, handling, display and use. High gloss and low haze are desired for cosmetic appearance and customer appeal.

Polypropylene containers have in the past been made by various injection, injection blow molding, extrusion blow molding, extrusion stretch-blow molding and injection stretch-blow molding processes. The present invention is particularly concerned with injection stretch-blow methods for molding containers by biaxially orienting random copolymer polypropylene resins.

The general concept of injection stretch-blow molding resins to produce biaxially oriented containers is well known in the art. For example, U.S. Patent No. 4,357,288 teaches an injection stretch-blow molding process whereby a preform is first formed by injection molding a low melt temperature, high density, crystalline polypropylene copolymer resin. The preform is then reheated, preblown and fully stretch-blown to produce the desired biaxially oriented container. This patent is hereby incorporated by reference for all purposes as if fully set forth.

U.S. Patent No. 3,923,943 and U.K. Patent Appln. No. 2139551A also teach various injection stretch-blow molding processes requiring a preblow and/or preheat step prior to the final stretch-blow. These references are also incorporated by reference herein for all purposes as if fully set forth.

Of particular relevance to the present invention is European Patent Appln. No. 0151741, which is also incorporated by reference for all purposes as if fully set forth. This reference teaches a container produced by injection stretch-blow molding a random copolymer polypropylene resin. The resin is first injected molded into a parison. As an essential step, the resulting parison is preblown and preheated under specified conditions, then stretch-blown to produce the final container.

Suitable resins are said to include random copolymers of propylene and alpha-olefins having an alpha-olefin content of between 1% to 6% by weight and a melt flow index (rate) (herein referred to as MFR) of between 4 and 50 g/10 minutes (230 $^\circ$ C, 2160 g). It is taught that the use of a resin having an MFR of less than 4 does not produce a container of sufficient transparency, while the use of a resin having an MFR of greater than 50 does not produce a container with sufficiently uniform wall thickness.

For the particular case of propylene-ethylene random copolymer resins, the aforementioned European application teaches that a suitable propylene-ethylene resin comprises an ethylene content of between 0.5% to 8%, more preferably 1% to 6%, by weight and an MFR of between 4 and 20 g/10 min. (230 $^\circ$ C, 2160 g). The use of a propylene-ethylene random copolymer resin having an MFR of less than 4 is said to result in insufficient transparency, while an MFR of greater than 20 is said to result in extremely uneven wall thickness.

In contrast to this teaching, it has surprisingly been discovered that propylene-ethylene random copolymer resins having higher MFRs can be biaxially oriented by injection stretch-blow molding to produce a container having excellent transparency, gloss, strength, stiffness and wall thickness properties. Additionally, such resins have excellent molding properties and can be injection stretch-blow molded to produce such containers without the need for a preblow or preheat step.

It is, therefore, an object of the present invention to produce a clear, glossy, strong and stiff biaxially oriented random copolymer polypropylene container from a resin having excellent molding properties.

It is a further object of the present invention to produce such a container from a higher MFR propylene-ethylene random copolymer resin previously taught as not acceptable for such purpose.

It is a still further object of the present invention to provide an injection stretch-blow molding method for producing such a container from the aforementioned resins.

It is a final object of the present invention to provide an injection stretch-blow molding method for producing such a container from the aforementioned resins without the need for the preblow/preheat step considered necessary by the prior art.

## Summary of the Invention

In accordance with the present invention, there is provided a container which, in its overall concept, comprises a biaxially oriented propylene-ethylene random copolymer resin. Suitable resins include those having an ethylene content of from about 0.5% to about 8% by weight, based upon the weight of the resin, a melt flow rate of greater than about 50 (more preferably about 60 or greater) g/10 minutes (230° C, 2160 g load), and an Mw/Mn ratio of between about 2.0 to about 2.5. The resin may also include a small amount, preferably less than about 1% by weight, of a nucleating agent to improve clarity.

The container is produced by stretch-blow molding a preform to biaxially orient the resin into the shape of the final container. The preform is obtained by injection molding the resin into the desired preform shape. Any one of a number of well-known injection stretch-blow molding processes may be utilized to accomplish these steps.

The container so produced will have excellent clarity, gloss, strength, stiffness and wall thickness properties. Further, by utilizing the higher MFR resins in accordance with the present invention, the molding operation can be run at lower temperatures due to the lower melt and crystallization temperatures of such resins. Additionally, a preblow and/or preheat step required by various prior injection stretch-blow molding processes is no longer required. The cycle times of the injection stretch-blow molding process can thereby by significantly decreased, resulting in higher production levels with lower production costs.

These and other features and advantages of the present invention will be more readily understood by those skilled in the art from a reading of the following detailed description with reference to the accompanying drawings.

## Brief Description of the Drawings

Fig. 1 is a side elevational view in partial cross-section of a typical injection molding assembly for producing preforms in accordance with the present invention (not to scale).

Fig. 2 is a side-elevational view in cross-section of a typical preblow molding assembly (not to scale).

Fig. 3 is a side-elevational view in partial cross-section of a typical stretch-blow molding assembly for producing containers in accordance with the present invention (not to scale).

Fig. 4 is a perspective top view of the injection molded preform produced in the molding assembly of Fig. 1.

Fig. 5 is a perspective top view of the stretch-blow molded container produced from the preform of Fig. 4 in the molding apparatus of Fig. 3.

## Detailed Description of the Preferred Embodiment

As previously indicated, the present invention provides a biaxially oriented random copolymer polypropylene container having excellent haze, gloss, tensile, impact, strength, stiffness and wall thickness properties. The container may be molded to any conventional size or shape as desired depending upon the intended end use.

The container comprises, in its overall concept, a biaxially oriented propylene-ethylene random copolymer resin. Particularly useful propylene-ethylene random copolymer resins comprise an ethylene content of from about 0.5% to about 8%, more preferably between about 1% to about 6%, by weight based upon the weight of the copolymer resin, with a melt flow rate (MFR) of greater than about 50, more preferably about 60 or greater, g/10 minutes (230° C, 2160 g, ASTM D-1238, Condition L). It is also preferred that these resins have a relatively narrow molecular weight distribution, i.e., an Mw/Mn ratio of between about 2.0 to about 2.5, measured as described in the Examples below.

Various processes for making these resins are well known in the art and the resins themselves are readily available from a number of manufacturers; therefore, such resins will not be further discussed except to point out that any resin having the above-described properties may be employed in this invention.

It should be noted, however, that it is especially preferred to utilize a high molecular weight, low MFR resin which has been partially decomposed by reaction under intense mixing conditions with an organic peroxide to lower the molecular weight of such resin and, thereby, increase its MFR. This also results in a narrowing of the molecular weight distribution. These decomposition processes are well known in the art.

For example, U.S. Patent No. 4,212,787 discloses such a decomposition process, and is incorporated by reference for all purposes as if fully set forth. Briefly, a higher molecular weight resin is contacted with

3

an amount of an organic peroxide under intense mixing conditions at a temperature and for a time sufficient to produce the desired MFR in the resin.

Suitable organic peroxides include, for example, dicumyl peroxide, di-t-butyl peroxide, and 2,5-dimethyl-2,5-di(t-butylperoxy)hexane.

The organic peroxides are utilized in amounts ranging from about 100 to about 1500 parts per million by weight based upon the weight of the resin. The resin and organic peroxide are mixed under high shear conditions in, for example, a Banbury, Henschel or like mixer, then melt blended and/or extruded in a twin screw, single screw or like extruder, at a temperature of between about 175°C to about 250°C, until the desired degree of molecular breakdown has occurred. It is well within the skill in the art to choose the particular organic peroxide, intense mixing conditions, temperature and time based upon the physical properties of the initial resin and the desired end MFR.

The resin may optionally include a small amount of a nucleating agent commonly employed in the art for improving the clarity of the molded container. Such nucleating agents include, for example, fine inorganic powders (such as silica), benzoic acid, sodium benzoate and dibenzylidenesorbitol (DBS). Particularly preferred are DBS and its derivatives including, but not limited to, the chloro, methyl, ethyl, propyl, methoxy and ethoxy substituted derivatives. These nucleating agents are preferably utilized in amounts less than about 1%, more preferably between about 0.1% to about 0.5%, by weight based upon the weight of the resin.

The resin may, if desired, also include one or more other well-known additives such as, for example, an antioxidant, ultraviolet absorber, antistatic agent, lubricant, colorant, pigment, inorganic filler and the like.

To biaxially orient the resin and produce the container, any one of a number of well-known injection stretch-blow molding processes may be utilized, such as one of those described in the aforementioned incorporated references. Typically in such processes, the resin is injection molded into a preform, which is subsequently stretched by means of a stretch rod for longitudinal orientation and blown with air or other suitable gas for radial orientation. Such processes generally require a preheat and/or preblow step prior to the final stretch-blowing; however, in the present invention such preheat/preblow step is optional and preferably omitted.

The following are illustrative of molding machines suitable for use in the above injection stretch-blow molding processes: Injection Orientation Bottle Moulder SB-III-20, SB-III-100, SB-III-250, SB-III-500 and SB-III-1000 manufactured by Aoki Manufacturing Co., Ltd., of Tokyo, Japan; and models ASB-50, ASB-150, ASB-250 and ASB-650 manufactured by Nissei ASB Machine Co., Ltd., of Tokyo, Japan.

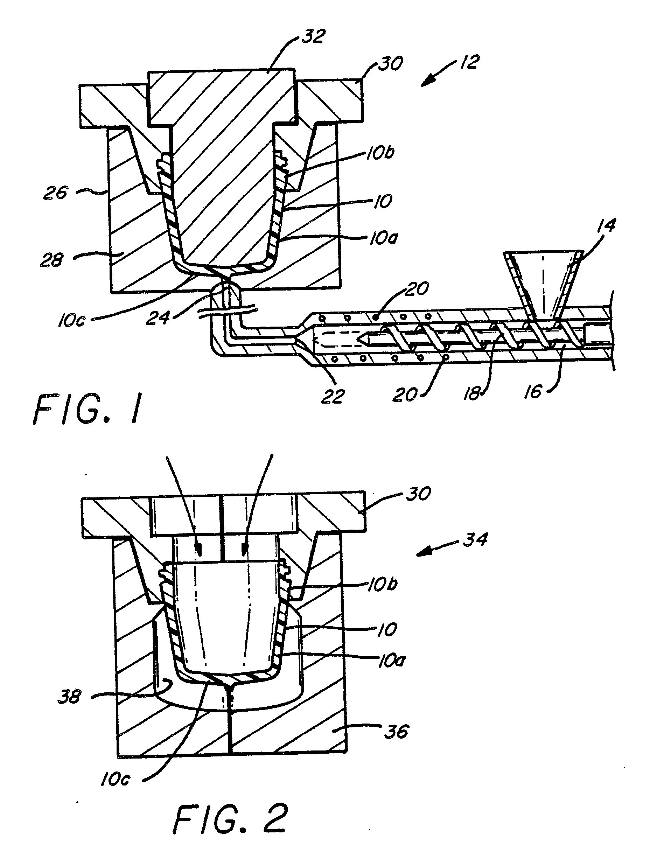

Referring now to Figs. 1-3, there is depicted a typical injection stretch-blow molding apparatus. The apparatus so depicted is not necessarily to scale but is provided for use in illustrating especially preferred stretch-blow molding methods in accordance with the present invention.

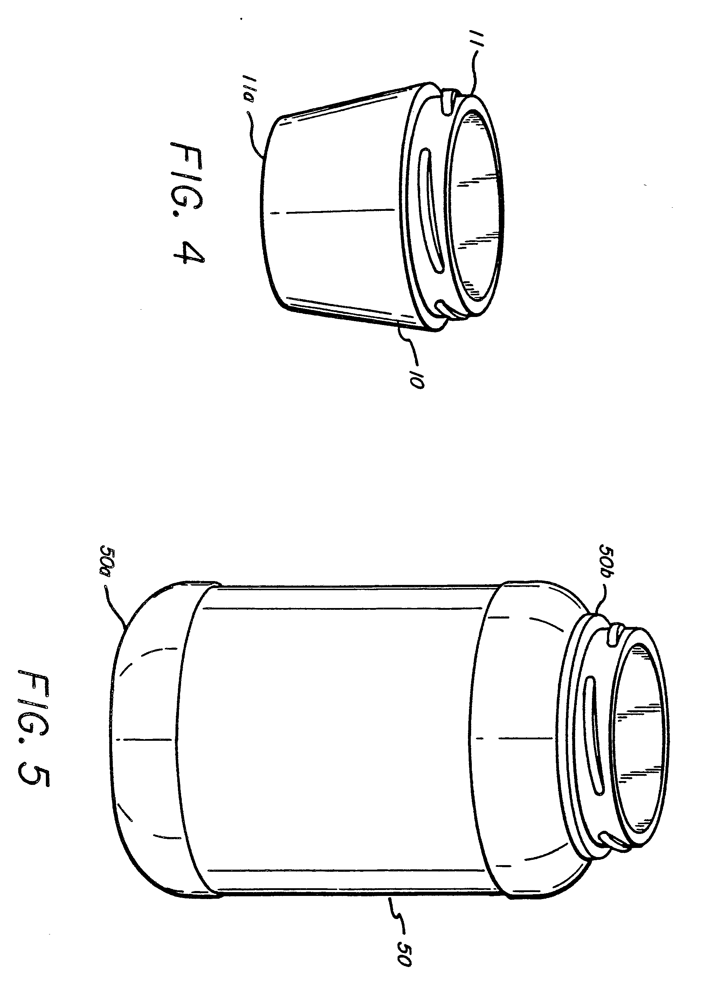

Referring to Fig. 1, a preform 10 (Fig. 4) is formed in an injection molding apparatus 12. A random copolymer polypropylene resin, as described above, is fed through an inlet hopper 14 into a barrel 16 disposed around a rotatable internal screw 18 which moves the resin through barrel 16 toward an outlet orifice 22. Barrel 16 is provided with heating elements 20 for heating the resin to a temperature of between about 130°C to about 300°C as it passes through barrel 16 to orifice 22. Of course, this temperature will vary primarily due to the particular resin utilized, but preferably will be from about 5°C to about 120°C, more particularly between about 5°C to about 50°C, above the crystallization temperature of the particular resin.

From orifice 22, the molten resin passes through a nozzle 24 into a three-part mold 26 which includes a first molding cavity 28, a second molding cavity 30 and a core 32 disposed through second molding cavity 30 and into first molding cavity 28 to define preform 10. The space between first molding cavity 28 and core 32 defines the body portion 10a of preform 10, while the space between second molding cavity 30 and core 32 defines the neck portion 10b of preform 10.

Preform 10 may be molded of any size and shape suitable for ultimately producing the desired size and shape of the final container. As depicted in Figs. 1 and 5, preform 10 is constructed as a shorter, wider member for producing wide-mouth containers such as, for example, cosmetic jars. The particular size and shape of preform 10, however, should not be considered a limitation on the present invention.

Also as depicted in Figs. 1 and 5, neck portion 10b of preform 10 is shaped for producing a container which utilizes a screw-type closure. It should be noted that second mold cavity 30 can be fashioned to produce any desired shape for neck portion 10b, and this again should not be considered a limitation on the present invention.

As previously mentioned, resin is fed into barrel 16 through hopper 14 and advanced through barrel 16 by screw 18 while being heated by heating elements 20. As molten resin approaches orifice 22, screw 18 is advanced forward (as shown by the dashed line) forcing the molten resin into mold 26 to form preform 10.

4

Typical mold fill times utilizing resins in accordance with the present invention range from about 1 second to about 5 seconds.

Core 32 and cavities 28 and 30 are kept cool, generally at a temperature of between about 10°C to about 35°C, to promote the partial solidification and crystallization of the molten resin within mold 26. This cooling may be accomplished by any one of a number of well-known intercooling arrangements (not depicted).

Upon the desired solidification of preform 10, mold 26 is opened by withdrawing core 32 from first and second molding cavities 28 and 30, respectively. First molding cavity 28 is then removed from preform 10 which is retained by second molding cavity 30 along neck portion 10b. It is preferred at this point that preform 10 still be in a semi-molten state but not so molten as to deform upon removal of first molding cavity 28 and core 32. In other words, upon removal of preform 10, it is preferred that a thin skin of crystalline resin be formed on the inner and outer surfaces of preform 10, with the region between such inner and outer surfaces remaining in a semicrystalline or semiamorphous state.

Cycle times for the injection molding step can vary widely depending in significant part on the MFR of the resin. The use of higher MFR resins can significantly decrease this cycle time due to the lower melt and crystallization temperatures of such resins. The injection molding apparatus 12 can thereby be run at lower temperatures and the injection molding step run at faster rates.

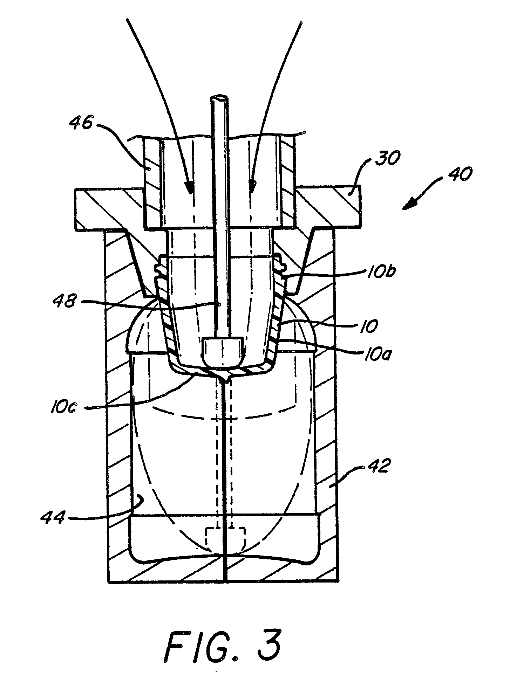

Preform 10, as held by second molding cavity 30, may then be transferred directly to the stretch-blow molding apparatus (labeled as 40 in Fig. 3) or may be subjected to an optional preblowing step. The preblowing step is utilized primarily to provide better heat and material (resin) distribution in the crystallizing preform. The resins utilized by the present invention do not require such preblowing step to produce suitable containers; therefore, it is preferred to go directly to the stretch-blow molding step because, in combination with the use of the higher MFR resins, cycle times can be significantly decreased.

Referring now to Fig. 2, by way of illustration there is depicted the optional preblowing apparatus 34. A split preblow die 36, shown in the closed position, is closed around second molding cavity 30 and body portion 10a of preform 10. The cavity 38 formed by split preblow die 36 is in the desired preblow shape.

Air or other suitable gas is blown into preform 10 (as shown by the arrows) to cause body portion 10a to swell into contact with the sides of split preblow die 36. Typical preblow air pressures range from about 40 to about 100 psi, with stretch ratios ranging from about 1.0 to about 2.0 (radial) and from about 1.2 to about 2.0 (longitudinal).

Split preblow die 36 is kept cool, generally at a temperature of between about 10°C to about 35°C to further promote solidification and crystallization within preform 10. Upon the desired solidification of preform 10, the gas pressure in the preblown preform 10 is released, split preblow die 36 is opened and the preblown preform 10 transferred to stretch-blow molding apparatus 40 (Fig. 3).

Referring now to Fig. 3, there is depicted stretch-blow molding apparatus 40. A split molding die 42, shown in the closed position, is closed around second molding cavity 30 and body portion 10a of preform 10. The cavity 44 formed by split molding die 42 is in the shape of the final container. A stretch rod mechanism 46 is then inserted into second molding cavity 30 and the stretch rod 48 extended to contact the closed end 10c of preform 10. As shown in Fig. 3 by the dashed lines, stretch rod 48 is activated to longitudinally stretch preform 10 to the base of split molding die 42. Stretch ratios typically range from about 1.2 to about 6.0 (longitudinal).

Concurrently or consecutively (as shown by the arrows), air or other suitable gas is blown into preform 10 to cause the sides to swell into contact with the sides of split molding die 42. Typical full blow air pressures range from about 60 to about 300 psi, with stretch ratios ranging from about 1.2 to about 5.0 (radial).

Again, stretch-blow molding apparatus 40 is kept cool, generally between about 10°C to about 35°C. After the container has cooled, stretch rod mechanism 46 is removed from second molding cavity 30, the gas pressure in the container released, split molding die 42 opened and retracted from the container, second molding cavity 30 opened and also retracted from the container, and the container (depicted as 50 in Fig. 5) ejected from stretch-blow molding apparatus 40.

As previously mentioned cycle times for injection stretch-slow molding of the resin into the final container will vary depending upon the particular molding apparatus and resin. As indicated earlier, the use of higher MFR resins can significantly decrease cycle times due to the lower melt and crystallization temperatures of such resins; consequently, the molding apparatus can be run at lower temperatures with less heat needing to be removed from preform 10 and container 50 to reach the desired solidification and crystallization. Additionally, the omission of the preheat/preblow step allowd by the use of the present highter MFR resins can also decrease cycle times.

The foregoing more general discussion of this invention will be further exemplified by the following specific examples offered by way of illustration and not limitation of the above-described invention.

## EXAMPLES

In the following examples, property evaluations were made employing the following tests:

(1) Melt Flow Rate -- ASTM D-1238, Condition L.

(2) Drop Impact Resistance -- ASTM 2463.

(3) Tensile Strength -- ASTM D-638.

(4) Haze -- ASTM D-1003.

(5) Gloss - ASTM D-2457.

(6) Flexural Modulus, secant -- ASTM D-790, Method 1.

(7) Mw/Mn -- measured by GPC on a Waters 150C Instrument with three Waters ultrastyragel columns (500; 10,000; 1,000,000 Angstroms) using a 1,2,4-trichlorobenzene solvent filtered and stabilized with 200 ppm BHT. The injection volume was 300 microliters with a sample concentration of 0.1% and a flow rate of 1.0 ml/min. The instrument was calibrated using 16 polystyrene standards ranging from 500 to 5,000,000 Mw. Mark-Houwink constants were employed to convert the results from polystyrene to polyethylene and polypropylene. The calibration was checked with NBS-1475 standard polyethylene.

## Examples 1-7

A series of ethylene-propylene RCP resins having an ethylene content of about 2.15% by weight were molded into a container on an Aoki SB-III-250 injection stretch-blow molding machine. No preheat or preblow step was utilized.

A preform of the general shape as depicted in Fig. 4 was first injected molded from the particular resin. The preform had an outer diameter of about 2.3 inches at the top 11 of the neck and about 2.2 inches at the base 11a. The overall height of the preform was about 1.9 inches, with an average body wall thickness of about 150 mils.

A container of the general shape as depicted in Fig. 5 was produced by stretch-blow molding such preform. The container had an outer diameter at the base 50a of about 3.2 inches, with an overall height of about 5.1 inches, a height from the upper shoulder 50b to the base 50a of about 4.6 inches and an average wall thickness of about 20 mils. In other words, the longitudinal stretch ratio was about 3.2 and the radial stretch ratio was about 1.5.

Each resin was produced from a batch of 2 MFR RCP resin by decomposition with Lupersol 101, a 2,5-dimethyl-2,5-di(t-butylperoxy)hexane available from the Lucidol Division of the Penwalt Corp., Buffalo, N.Y. The resin and peroxide were intensively mixed in a Henschel mixer then melt blended and extruded in a single screw extruder at a temperature of about 230°C to the desired MFR. Also, small amounts of a nucleating agent (Millad 3940, a sorbitol derivative available from Milliken Chemical of Inman, South Carolina), an antioxidant (Ultranox 626, a diphosphite additive stabilizer available from Borg Warner Chemicals of Parksburg, West Virginia), an antacid (calcium stearate), and another antioxidant (Irganox® 1010, a hindered phenol available from Ciba-Geigy of Ardsley, New York) were added to the resin. The properties and compositions of each resin are listed below in Table I. The molding conditions for the Aoki SB-250-III are listed below in Table II. The measured properties of the molded containers are listed below in Table III.

It should be noted that the Aoki molder is a continous three-stage apparatus wherein the injection molding, stretch-blow molding and ejection stages are run concurrently on three different batches. The cycle time of each stage, therefore, is limited by the rate limiting step, in this case the injection molding stage. The cycle time as reported in Table II is the time between ejection of containers from the apparatus.

TABLE I

| Ex. | Ethyl. (wt%) | MFR (g/10min.) | Mw/Mn | Nuc.Ag. (wt%) | Ultra. (wt%) | Cal.St. (wt%) | Irgan. (wt%) |
|---|---|---|---|---|---|---|---|
| 1 | 2.15 | 2 | 3.13 | 0.25 | 0.06 | 0.08 | 0.08 |
| 2 | 2.15 | 12 | 2.52 | 0.25 | 0.06 | 0.08 | 0.08 |
| 3 | 2.15 | 24 | 2.36 | 0.25 | 0.06 | 0.08 | 0.08 |
| 4 | 2.15 | 36 | ---- | 0.25 | 0.08 | 0.05 | 0.08 |
| 5 | 2.15 | 48 | 2.17 | 0.25 | 0.08 | 0.05 | 0.08 |
| 6 | 2.15 | 62 | 2.16 | 0.25 | 0.08 | 0.05 | 0.08 |
| 7 | 2.15 | 74 | 2.11 | 0.25 | 0.08 | 0.05 | 0.08 |

TABLE II

| Ex. | Cycle Time (sec) | Barrel Temp. (°C) | Mold Fill Time (sec) | Mold Temp. (°C) |
|---|---|---|---|---|
| 1 | 21.70 | 296 | 4.27 | 32 |
| 2 | 20.47 | 250 | 2.16 | 32 |
| 3 | 19.19 | 185 | 3.68 | 10 |
| 4 | 17.09 | 185 | 3.30 | 10 |
| 5 | 15.86 | 180 | 1.71 | 10 |
| 6 | 16.63 | 164 | 2.01 | -- |
| 7 | 16.57 | 164 | 1.99 | -- |

TABLE III

| Ex. | % Haze | | % Gloss | | Tens. Str. (psi) | | Flex. Mod. 1% Secant (psi) | Drop Imp. (feet) | |
|---|---|---|---|---|---|---|---|---|---|
| | Tot. | Inter. | | | Yield | Break | | 32°F | 72°F |
| 1 | 5.3 | 4.0 | 31.9 | MD | 5171 | 5088 | 151,553 | 2.0 | 12.5 |
| | | | | TD | ---- | ---- | | | |
| 2 | 10.0 | 3.8 | 44.5 | MD | 8944 | 9053 | 191,089 | 3.7 | ---- |
| | | | | TD | ---- | ---- | | | |
| 3 | 4.8 | 3.7 | 53.3 | MD | 8168 | 9011 | 177,000 | 2.8 | 8.0 |
| | | | | TD | 4146 | 3834 | | | |
| 4 | 5.0 | 4.1 | 90.4 | MD | 10530 | 11365 | 180,139 | 5.5 | 14.3 |
| | | | | TD | 3839 | 4857 | | | |
| 5 | 8.0 | 3.5 | 66.4 | MD | 9551 | 10276 | 176,658 | 3.3 | 13.5 |
| | | | | TD | 3759 | 4207 | | | |
| 6 | 4.8 | 3.1 | 68.0 | MD | 12273 | 12420 | 181,157 | 5.1 | 11.5 |
| | | | | TD | 3714 | 4403 | | | |
| 7 | 3.8 | 2.7 | 86.1 | MD | 13739 | 13518 | 194,096 | 4.5 | 15+ |
| | | | | TD | 3659 | 4995 | | | |

These results listed in Table III clearly show that the use of the higher MFR resins in accordance with the present invention produce containers with excellent haze, gloss, tensile strength, flexural modulus and drop impact properties. In fact, it is generally indicated that these properties improve as the MFR increases. The resins in accordance with the present invention actually show among the best results for each of these measured properties. Also the wall thickness of the containers appeared to have good uniformity. These are unexpected results.

Additionally as shown by Table II, cycle times are markedly decreased and the molding process is able to run at lower temperatures with the higher MFR resins.

Many modifications and variations besides the embodiments specifically mentioned may be made in the Also the wall thickness of the containers appeared to have good uniformity. These are unexpected results.

Additionally as shown by Table II, cycle times are markedly decreased and the molding process is able to run at lower temperatures with the higher MFR resins.

Many modifications and variations besides the embodiments specifically mentioned may be made in the compositions and methods described herein and depicted in the accompanying drawings without substantially departing from the concept of the present invention. Accordingly, it should be clearly understood that the form of the invention described and illustrated herein is exemplary only, and is not intended as a limitation on the scope thereof.

## Claims

1. A random copolymer polypropylene container comprising a biaxially oriented propylene-ethylene random copolymer resin having an ethylene content between 0.5% to 8% by weight, based upon the weight of the resin, and a melt flow rate of greater than 50 g/10 min.

2. A random copolymer polypropylene container obtained by:
injection molding a propylene-ethylene random copolymer resin having an ethylene content between 0.5% to 8% by weight, based upon the weight of the resin, and a melt flow rate of greater than 50 g/10 min., to produce a preform; and
stretch-blow molding said preform to biaxially orient said resin into the shape of said container.

3. A method for producing a random copolymer polypropylene container comprising the step of stretch-blow molding a preform obtained from a propylene-ethylene random copolymer resin, preferably obtained by injection molding said copolymer resin, having an ethylene content between 0.5% to 8% by weight, based upon the weight of the resin, and a melt flow rate of greater than 50 g/10 min., to biaxially orient said resin into the shape of said container.

4. A container or method according to any of the preceding claims wherein said random copolymer resin has a melt flow rate of 60 g/10 min. or greater.

5. A container or method according to any of the preceding claims wherein said ethylene content is between 1% to 6% by weight based upon the weight of said resin.

6. A container or method according to any of the preceding claims wherein said resin has an Mw/Mn ratio of between 2.0 to 2.5.

7. A container or method according to any of the preceding claims wherein said resin includes a nucleating agent in an amount less than 1% by weight based upon the weight of the resin.

FIG. I

FIG. 2

FIG. 3

FIG. 4

FIG. 5